# EUROPÄISCHE PATENTSCHRIFT

(11) **EP 1 967 712 B1**
(45) Veröffentlichungstag und Bekanntmachung des Hinweises auf die Patenterteilung: **03.08.2011**
(21) Anmeldenummer: 08002593.5
(22) Anmeldetag: 13.02.2008
(51) Int. Cl.: F01N 3/20, F01N 3/28, B01J 35/00, B01J 35/04

(54) **Elektrisch beheizbarer Wabenkörper und Verfahren zu dessen Betrieb**
Electrically heated honeycomb and method for its operation
Corps en nid d'abeille pouvant être chauffé électriquement et son procédé de fonctionnement

(30) Priorität: 06.03.2007 DE 102007010758
(43) Veröffentlichungstag der Anmeldung: 10.09.2008
(73) Patentinhaber: Emitec Gesellschaft für Emissionstechnologie mbH, 53797 Lohmar (DE)
(72) Erfinder: Brück, Rolf, 51429 Bergisch Gladbach (DE)
(74) Vertreter: Rössler, Matthias

(56) Entgegenhaltungen:
- EP-A- 0 599 323
- EP-A- 1 256 699
- DE-A1- 10 351 520
- GB-A- 2 250 216
- JP-A- 2002 028 448

## Beschreibung

Gegenstand der vorliegenden Erfindung ist ein elektrisch beheizbarer Wabenkörper, sowie ein Verfahren zu dessen Betrieb. Bevorzugtes Einsatzgebiet dieser Wabenkörper ist als Katalysator-Trägerkörper zur Aufbereitung des Abgases von Verbrennungskraftmaschine, insbesondere im Abgassystem von Automobilen.

Elektrisch beheizbare Wabenkörper sind bekannt, beispielsweise aus der WO-A-96/10127, auf die in Bezug auf die Ausbildung und den Betrieb des elektrisch beheizbaren Wabenkörpers vollinhaltlich Bezug genommen wird. Die Ansteuerung eines solchen elektrischen Wabenkörpers erfolgt in der Regel über eine Steuerelektronik, mit der die Leistungsabgabe an den elektrisch beheizbaren Wabenkörper geregelt wird.

Die GB 2 250 216 A offenbart eine Matrix für einen katalytischen Konverter, die elektrische Heizmittel in Form von PTC-Widerständen aufweist.

Die DE 103 51 520 A1 betrifft eine Abgasreinigungsvorrichtung und ein Abgasreinigungsverfahren, bei dem eine elektrische Heizvorrichtung an einem Katalysatorelement angeordnet ist, wobei der Heizer ein PTC-Heizer sein kann, der seine Temperatur selbst reguliert.

Die EP 0 599 323 A1 offenbart einen regenerierbaren Abgasfilter, welcher durch einen elektrischen Stromfluss aufgeheizt werden kann. Mit dem Abgasfilter wird ein in der Nähe einer Kanalwand angeordnetes PTC-Element in Serie geschaltet, so dass es in thermischen Kontakt mit der Wand und darüber auch mit dem vorbeiströmenden Abgas ist.

Der vorliegenden Erfindung liegt die Aufgabe zugrunde, einen elektrisch beheizbaren Wabenkörper vorzuschlagen, der einfacher angesteuert werden kann, sowie ein entsprechendes Verfahren zum Betrieb eines solchen Wabenkörpers vorzuschlagen.

Diese Aufgaben werden gelöst durch die unabhängigen Ansprüche. Abhängige Ansprüche sind auf vorteilhafte Weiterbildungen gerichtet.

Der erfindungsgemäße elektrisch beheizbare Wabenkörper weist für ein Fluid durchströmbaren Hohlräumen, beispielsweise Kanäle auf und umfasst mindestens eine Stromverteilungsstruktur, wobei die Stromverteilungsstruktur über eine Stromzuführung mit einer Stromquelle verbindbar ist, und zeichnet sich dadurch aus, dass die mindestens eines der folgenden Bauteile:
a) die Stromzuführung und zumindest ein Regelelement aus einem Material mit einem positiven Temperaturkoeffizienten (PTC, positive temperature coefficient) umfasst, das zumindest in thermischen Kontakt mit einem den Wabenkörper durchströmenden Fluid, beispielsweise Abgas, bringbar ist.

Materialien mit einem positiven Temperaturkoeffizienten, insbesondere sogenannte PTC-Widerstände, weisen einen Temperaturbereich auf, in dem der elektrische Widerstand gegen die Temperatur stark ansteigt. Solche Elemente werden auch als sogenannte selbstregelnde Heizwiderstände bezeichnet, die durch Veränderung seines elektrischen Widerstandes eine bestimmte Temperatur, die so genannte signifikante oder Nenntemperatur, halten. Die Stromverteilungsstrukturen dienen dem Verteilen des einbringbaren elektrischen Stroms hin zu den einzelnen im Inneren des Wabenkörpers, insbesondere in einem Heizkatalysator, ausgebildeten Strompfaden oder auch hin zu den aufzuheizenden Hohlraumwänden des Wabenkörpers. Die Stromverteilungsstrukturen können insbesondere einen Teil der Mantelfläche des entsprechenden Wabenkörpers bilden, insbesondere in Form von Halbschalen. Unter der Stromzuführung wird ein Element verstanden, mittels dem eine elektrische Verbindung zu einer Stromquelle herstellbar ist. Diese kann beispielsweise einen elektrischen Leiter, einen elektrischen Stecker und/oder eine elektrische Buchse enthalten. Die Stromzuführung ist mit der Stromverteilungsstruktur elektrisch verbindbar oder verbunden. Der elektrisch beheizbare Wabenkörper kann mehrere Wabenstrukturen umfassen, von denen mindestens eine elektrisch beheizbar ist, insbesondere als sogenannter Heizkatalysator vor einer nicht direkt elektrisch beheizten weiteren Wabenstruktur dient.

Die Ausbildung eines PTC-Elementes als Regelelement im Stromkreis, mit dem der elektrisch beheizbare Wabenkörper und/oder der Heizkatalysator betrieben wird, ermöglicht in vorteilhafter Weise die Ausbildung eines selbstregelnden Stromkreises, so dass auf weitere Steuerungsmechanismen für den elektrisch beheizbaren Wabenkörper verzichtet oder doch diese wesentlich einfacher ausgestaltet werden können.

Bei dem erfindungsgemäßen Wabenkörper umfasst die Stromzuführung eine Hülse, die außen an dem Wabenkörper angebracht ist.

Bevorzugt ist die Hülse gasdicht mit einem Mantelrohr des Wabenkörpers verbunden und gegebenenfalls elektrisch gegen einen im Inneren der Hülse liegenden elektrischen Leiter isoliert.

Bei dem erfindungsgemäßen Wabenkörper ist das Regelelement zumindest teilweise in der Hülse ausgebildet.

Die Hülse kann hier insbesondere Schutz vor mechanischen Einwirkungen bieten und thermischen Kontakt mit einem den Wabenkörper durchströmenden Fluid, wie beispielsweise Abgas, herstellen.

Gemäß einer weiteren vorteilhaften Ausgestaltung des Wabenkörpers ragt das Regelelement zumindest teilweise in das Innere des Wabenkörpers. Besonders bevorzugt ist auch eine Ausgestaltung, bei der das Regelelement zumindest teilweise von dem Fluid umströmbar ist.

Dies ermöglicht eine sehr einfache Form eines thermischen Kontaktes mit dem den Wabenkörper durchströmenden Fluid, da dieses direkt am Regelelement vorbeiströmt und dieses erwärmt beziehungsweise abkühlt.

Gemäß einer weiteren vorteilhaften Ausgestaltung des Wabenkörpers ist das Regelelement aus mindestens einem der folgenden Materialien gebildet:
a) einer Titanatkeramik und
b) einer Bariumtitanatkeramik.

Gemäß einem weiteren Aspekt wird ein Verfahren zum Betrieb eines für ein Fluid durchströmbaren elektrisch beheizbaren Wabenkörpers gemäß der Erfindung vorgeschlagen, der mindestens eine Stromverteilungsstruktur umfasst, die zur Stromversorgung über eine Stromzuführung mit einer Stromquelle verbunden ist, wobei die Stromversorgung über mindestens ein selbstregelndes Regelelement erfolgt, welches zumindest in thermischem Kontakt mit dem Fluid steht.

Hierbei kann das Regelelement, welches insbesondere aus einem Material mit einem positiven Temperaturkoeffizienten ausgebildet ist, im Wabenkörper selbst, in der Stromzuführung und/oder in der Stromverteilungsstruktur ausgebildet sein. Voraussetzung ist, dass das Regelelement dann von Strom durchflossen wird, wenn der elektrisch beheizbare Wabenkörper beheizt wird.

Gemäß einer vorteilhaften Ausgestaltung des erfindungsgemäßen Verfahrens weist das Regelelement eine Regeltemperatur auf, die einer Temperatur des Fluides entspricht, die größer oder gleich einer Anspringtemperatur mindestens eines der folgenden Bauteile ist:
a) einer katalytisch aktiven Beschichtung auf zumindest Teilen des Wabenkörpers und
b) mindestens einer katalytisch aktiven Beschichtung einer Struktur zur Abgasaufbereitung, die stromabwärts des Wabenkörpers ausgebildet ist.

Unter einer Struktur ist insbesondere ein Wabenkörper zu verstehen, der eine entsprechende katalytisch aktive Beschichtung aufweist. Unter Möglichkeit a) wird hier insbesondere verstanden, dass der elektrisch beheizbare Wabenkörper zwei Wabenstrukturen umfasst, die hintereinander ausgebildet sind, wobei insbesondere eine Wabenstruktur als Heizkatalysator ausgebildet ist, der von elektrischem Strom zur Aufheizung durchströmbar ist. Weiterhin kann auch mindestens eine dieser Wabenstrukturen nur in einem Teilbereich eine katalytisch aktive Beschichtung umfassen. Unter der Anspringtemperatur (light off temperature) wird die Temperatur verstanden, die zum Ablaufen der katalytischen Reaktion zumindest erforderlich ist. Ist als weitere Wabenstruktur in dem elektrisch beheizbaren Wabenkörper beispielsweise eine Partikelfalle oder ein Partikelfilter ausgebildet, so umfasst die Anspringtemperatur die Regenerationstemperatur der Falle oder des Filters.

Gemäß einer weiteren vorteilhaften Ausgestaltung des erfindungsgemäßen Verfahrens wird das Regelelement zumindest teilweise von dem Fluid umströmt.

Das erfindungsgemäße Verfahren kann insbesondere zum Betrieb eines erfindungsgemäßen Wabenkörpers eingesetzt werden. Die für den erfindungsgemäßen Wabenkörper offenbarten Details und Vorteile lassen sich auf das erfindungsgemäße Verfahren übertragen und anwenden und umgekehrt. Im folgenden wird die Erfindung anhand der beigefügten Figuren näher erläutert, ohne dass die Erfindung auf die dort gezeigten Ausführungsbeispiele beschränkt wäre. Es zeigen schematisch:
- Fig. 1: ein erstes Ausführungsbeispiel eines erfindungsgemäßen Wabenkörpers in Explosionsansicht;
- Fig. 2: einen Ausschnitt aus dem ersten Ausführungsbeispiel eines erfindungsgemäßen Wabenkörpers;
- Fig. 3: einen Ausschnitt aus einem zweiten Ausführungsbeispiel eines erfindungsgemäßen Wabenkörpers; und
- Fig. 4: einen Querschnitt eines Wabenkörpers.

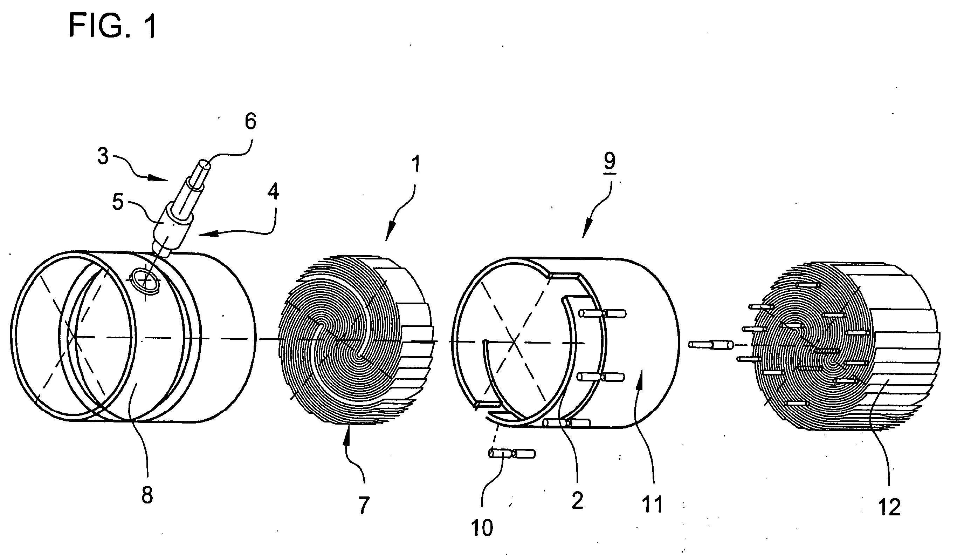

Fig. 1 zeigt schematisch ein erstes Ausführungsbeispiel eines elektrisch beheizbaren Wabenkörpers 1. Dieser umfasst eine Stromverteilungsstruktur 2 und eine Stromzuführung 3. Die Stromzuführung 3 umfasst im ersten Ausführungsbeispiel ein Regelelement 4, welches in einer Hülse 5 ausgebildet ist. Über einen elektrischen Leiter 6 und das Regelelement 4 kann die Stromverteilungsstruktur 2 mit einer Stromquelle verbunden werden. Hierdurch kann der scheibenförmige Heizkatalysator 7 durch ohmsche Wärme beheizt werden. Die Hülse 5 ist stoffschlüssig mit einem äußeren Mantelrohr 8 verbunden.

In dem äußeren Mantelrohr 8 ist ein inneres Mantelrohr 9 ausgebildet. Die Stromverteilungsstruktur 2 ist ein Teil des inneren Mantelrohrs 9. Die Stromverteilungsstruktur 2 ist über isolierende Haltestifte 10 mit einem Mantelrest 11 verbunden, die auch eine weitere Wabenstruktur 12 umfasst. Diese weitere Wabenstruktur 12 wird indirekt über den Heizkatalysator 7 beheizt, da im Betrieb das durch den Heizkatalysator 7 strömende Abgas durch die weitere Wabenstruktur 12 strömt und diese aufheizt. Weitere Wabenstruktur 12 und Heizkatalysator 7 sind durch isolierende Haltestifte 10 miteinander verbunden.

Erfindungsgemäß ist das Regelelement 3 aus einem PTC-Material, also einem Material mit einem positiven Temperaturkoeffizienten ausgebildet. Dies bedingt eine selbstregelnde Ausführung des elektrisch beheizbaren Wabenkörpers 1. Hierbei wird die Regeltemperatur des Regelelementes 4 so gewählt, dass diese einer Anspringtemperatur einer katalytischen Reaktion beispielsweise auf dem Heizkatalysator 7, der weiteren Wabenstruktur 12 und/oder einer anderen Struktur zur Umsetzung von Abgasen entspricht. Entsprechen bedeutet hier, dass die Regeltemperatur des Regelelementes 4 so gewählt und/oder dieses an einer solchen Stelle eingebaut wird, dass an dem Regelelement 4 die Regeltemperatur anliegt, wenn die gewünschte Anspringtemperatur an der entsprechenden Struktur anliegt.

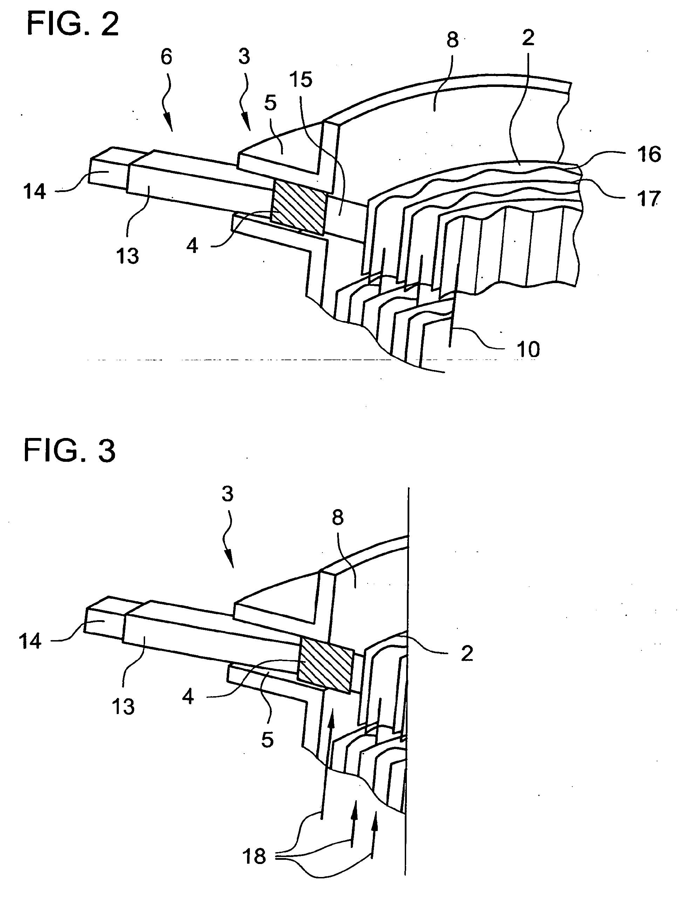

Fig. 2 zeigt schematisch einen Ausschnitt aus dem ersten Ausführungsbeispiel eines erfindungsgemäßen elektrisch beheizbaren Wabenkörpers 1. Die Stromzuführung 3 ist mit dem äußeren Mantelrohr 8 über die Hülse 5 verbunden. In der Hülse ist das Regelelement 4 ausgebildet, welches über einen elektrischen Leiter 6 umfassend eine hochtemperaturfeste Isolierung 13, die so ausgebildet ist, dass sie den Temperaturen im Abgassystem von Automobilen standhalten kann, und einen Innenleiter 14 im Inneren der Isolierung 13 mit einer Stromquelle, beispielsweise einem Generator und/oder einer Batterie verbindbar ist. Das Regelelement 4 ist weiterhin über den Leiter 15 mit der Stromverteilerstruktur 2 verbunden. Der Heizkatalysator 7 ist hier aus gewellten metallischen Lagen 16 und glatten metallischen Lagen 17 ausgebildet.

Fig. 3 zeigt schematisch einen Ausschnitt eines zweiten Ausführungsbeispiels eines erfindungsgemäßen elektrisch beheizbaren Wabenkörpers 1. Im Unterschied zum ersten Ausführungsbeispiel ragt hier das Regelelement 4 teilweise aus der Hülse 6 und kann somit zumindest teilweise von Abgas 18 umströmt werden. Das Regelelement 4 ist hierbei direkt mit der Stromverteilungsstruktur 2 verbunden.

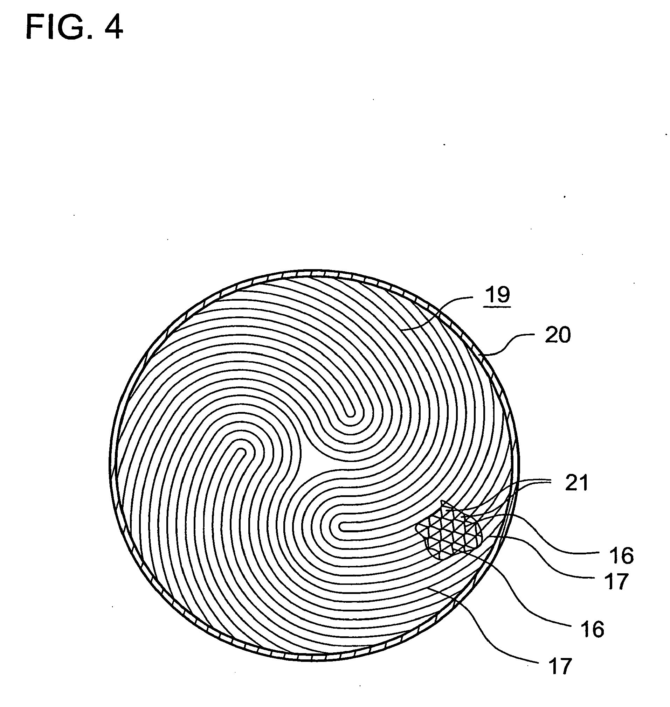

Fig. 4 zeigt schematisch ein Beispiel einer Wabenstruktur 19 in einem Mantelrohr 20 aufgebaut aus gewellten metallischen Lagen 16 und glatten metallischen Lagen 17, die gemeinsam Kanäle 21, also für ein Fluid beispielsweise Abgas 18 durchströmbare Hohlräume bilden. In der Art dieser Wabenstruktur 19 können sowohl der Heizkatalysator 7 als auch die weitere Wabenstruktur 12, sowie weitere Wabenstrukturen 19 ausgebildet sein. Alternativ oder zusätzlich können keramische monolithische Wabenstrukturen ausgebildet sein, bei denen beispielsweise beim Einsatz als Heizkatalysator 7 eine Stromverteilungsstruktur 2 ausgebildet ist, die eine Verteilung des elektrischen Stroms und damit eine Aufheizung des Heizkatalysators 7 bewirken. Die weitere Wabenstruktur 12, der Heizkatalysator und/oder andere Wabenstrukturen 19 im Abgassystem können katalytisch aktive Beschichtungen tragen, insbesondere mindestens eine der folgenden Beschichtungen: a) Oxidationskatalysatorbeschichtung; b) eine die Hydrolyse eines Reduktionsmittelvorläufers, beispielsweise Harnstoff, zu einem Reduktionsmittel, beispielsweise Ammoniak reduzierende Beschichtung und c) eine SCR-Katalysatorbeschichtung.

Der erfindungsgemäße elektrisch beheizbare Wabenkörper 1 erlaubt durch die Ausbildung eines selbstregelnden Regelelementes 4 beispielsweise aus einem PTC-Material (positive temperetaure coefficient, positiver Temperaturkoeffizient) die Verwirklichung einer einfachen Regelung der Heizleistung des elektrischen beheizbaren Wabenkörpers 1, da auf die weitere Steuerungs- oder Regelelektronik wesentlich vereinfacht oder sogar auf diese verzichtet werden kann.

### Bezugszeichenliste

- 1: elektrisch beheizbarer Wabenkörper
- 2: Stromverteilungsstruktur
- 3: Stromzuführung
- 4: Regelelement
- 5: Hülse
- 6: elektrischer Leiter
- 7: Heizkatalysator
- 8: äußeres Mantelrohr
- 9: inneres Mantelrohr
- 10: Haltestifte
- 11: Mantelrest
- 12: weitere Wabenstruktur
- 13: hochtemperaturfeste Isolierung
- 14: Innenleiter
- 15: Leiter
- 16: gewellte metallische Lage
- 17: glatte metallische Lage
- 18: Abgas
- 19: Wabenstruktur
- 20: Mantelrohr
- 21: Kanal

## Patentansprüche

1. Elektrisch beheizbarer Wabenkörper (1) mit für ein Fluid (19) durchströmbaren Hohlräumen (21), umfassend mindestens eine Stromverteilungsstruktur (2), wobei die Stromverteilungsstruktur (2) über eine Stromzuführung (3) mit einer Stromquelle verbindbar ist, bei mindestens eines der folgenden Bauteile:
a) die Stromzuführung (3) und
b) die Stromverteilungsstruktur (2)
zumindest ein Regelelement (4) aus einem Material mit einem positiven Temperaturkoeffizienten (PTC, positive temperature coefficient) umfasst, das zumindest in thermischen Kontakt mit einem den Wabenkörper (1) durchströmenden Fluid bringbar ist, **dadurch gekennzeichnet, dass** die Stromzuführung (3) eine Hülse (5) umfasst. die außen an dem Wabenkörper (1) angebracht ist und das Regelelement (4) zumindest teilweise in der Hülse (5) ausgebildet ist.

2. Wabenkörper (1) nach Anspruch 1, bei dem das Regelelement (4) zumindest teilweise in das Innere des Wabenkörpers (1) ragt.

3. Wabenkörper (1) nach einem der vorhergehenden Ansprüche, bei dem das Regelelement (4) zumindest teilweise von dem Fluid umströmbar ist.

4. Wabenkörper (1) nach einem der vorhergehenden Ansprüche, bei dem das Regelelement (4) aus mindestens einem der folgenden Materialien ausgebildet ist:
a) einer Titanatkeramik und
b) einer Bariumtitanatkeramik.

5. Verfahren zum Betrieb eines für ein Fluid durchströmbaren elektrisch beheizbaren Wabenkörpers (1) nach einem der Patentansprüche 1 bis 4, wobei der Wabenkörper (1) mindestens eine Stromverteilungsstruktur (2) umfasst, die zur Stromversorgung über eine Stromzuführung (3) mit einer Stromquelle verbunden ist, und bei dem die Stromversorgung über mindestens ein selbstregelndes Regelelement (4) erfolgt, welches zumindest in thermischem Kontakt mit dem Fluid steht.

6. Verfahren nach Anspruch 5, bei dem das Regelelement (4) eine Regeltemperatur aufweist, die einer Temperatur des Fluides (19) entspricht, die größer oder gleich einer Anspringtemperatur mindestens eines der folgenden Bauteile ist:
a) einer katalytisch aktiven Beschichtung auf zumindest Teilen des Wabenkörpers (1, 7, 12) und
b) mindestens einer katalytisch aktiven Beschichtung einer Struktur zur Abgasaufbereitung, die stromabwärts des Wabenkörpers (1) ausgebildet ist.

7. Verfahren nach einem der Ansprüche 5 oder 6, bei dem das Regelelement (4) zumindest teilweise von dem Fluid (19) umströmt wird.

## Claims

1. An electrically heatable honeycomb body (1) having cavities (21) through which a fluid (18) can flow, comprising at least one power distribution structure (2), wherein the power distribution structure (2) is being connectable to a power source via a power feed line (3), wherein at least one of the following components:
a) the power feed line (3) and
b) the power distribution structure (2)
comprises at least a control element (4) made of a material with a positive temperature coefficient (PTC), which can be placed at least in thermal contact with the fluid flowing through the honeycomb body (1), **characterized in that** the power feed line (3) has a sleeve (5) which is attached to an outside of the honeycomb body (1) and that the control element (4) is formed at least partially in said sleeve (5).

2. The honeycomb body (1) according to claim 1, wherein the control element (4) projects at least partially into the interior of the honeycomb body (1).

3. The honeycomb body (1) according to one of the preceding claims, wherein the fluid can flow at least partially around the control element (4).

4. The honeycomb body (1) according to one of the preceding claims, wherein the control element (4) is formed from at least one of the following materials:
a) a titanate ceramic and
b) a barium titanate ceramic.

5. A method for operating an electrically heatable honeycomb body (1) through which a fluid (18) can flow according to one of the claims 1 to 4, wherein the honeycomb body (1) comprises at least one power distribution structure (2) connected to a power source via a power feed line (3) and in which the power is supplied via at least one self-regulating control element (4), being in thermal contact at least with the fluid.

6. The method according to claim 5, in which the control element (4) has a control temperature which corresponds to a temperature of the fluid (19) being higher than or equal to an activation temperature of at least one of the following components:
a) a catalytically active coating on at least parts of the honeycomb body (1, 7, 12) and
b) at least one catalytically active coating of a structure for treating exhaust gas, the structure being formed downstream of the honeycomb body (1).

7. The method according to one of claims 5 or 6, wherein the fluid (19) at least partially flows around the control element (4).

## Revendications

1. Corps en nids d'abeilles pouvant être chauffé (1), avec des cavités (21) à travers lesquelles un fluide (19) peut s'écouler, comprenant au moins une structure de distribution de courant (2), la structure de distribution de courant (2) pouvant être connectée à l'intermédiaire d'une amenée de courant (3) avec une source de courant, dans quel cas au moins un des composants suivants :
a) l'amenée de courant (3) et
b) la structure de distribution de courant (2)
comprend au moins un élément de réglage (4) d'un matériau avec un coefficient de température positif (PTC, positiver Temperaturkoeffizient), lequel peut au moins entrer en contact thermique avec un fluide s'écoulant à travers le corps en nids d'abeilles (1), **caractérisé en ce que** l'amenée de courant (3) comprend une douille (5) qui est rapportée à l'extérieur sur le corps en nids d'abeilles (1) et **en ce que** l'élément de réglage (4) est formé au moins partiellement dans la douille (5).

2. Corps en nids d'abeilles (1) selon la revendication 1, dans le cas duquel l'élément de réglage (4) avance au moins partiellement à l'intérieur du corps en nids d'abeilles.

3. Corps en nids d'abeilles (1) selon l'une des revendications précédentes, dans le cas duquel le fluide peut s'écouler au moins partiellement autour de l'élément de réglage (4).

4. Corps en nids d'abeilles (1) selon l'une des revendications précédentes, dans le cas duquel l'élément de réglage (4) est réalisé à partir d'au moins un des matériaux suivants :
a) d'une céramique de titanate et
b) d'une céramique de titanate de baryum.

5. Procédé pour l'opération d'un corps en nids d'abeilles pouvant être chauffé électriquement (1) et à travers lequel un fluide (18) peut s'écouler selon l'une des revendications 1 à 4, le corps en nids d'abeilles (1) comprenant au moins une structure de distribution de courant (2), laquelle pour être approvisionnée en courant, est en connexion avec une source de courant à l'intermédiaire d'une amenée de courant (3) et dans le cas duquel l'approvisionnement est effectué par au moins un élément de réglage autorégulateur (4), lequel est au moins en contact thermique avec le fluide.

6. Procédé selon la revendication 5, dans le cas duquel l'élément de réglage (4) présente une température de réglage, qui correspond à une température du fluide (19) qui est supérieure ou égale à une température d'amorce d'au moins un des composants suivants :
a) d'un revêtement à activité catalytique sur au moins des parties du corps en nids d'abeilles (1, 7, 12) et
b) d'au moins un revêtement à activité catalytique d'une struture pour le conditionnement de gaz d'échappement, qui est formée en aval du corps en nids d'abeilles (1).

7. Procédé selon l'une des revendications 5 ou 6, dans le cas duquel le fluide (19) s'écoule au moins partiellement autour de l'élément de réglage (4).
